Europäisches Patentamt

European Patent Office

Office européen des brevets

(19)

(11) Veröffentlichungsnummer: **0 249 912**
**A2**

(12) **EUROPÄISCHE PATENTANMELDUNG**

(21) Anmeldenummer: **87108545.2**

(22) Anmeldetag: **12.06.87**

(51) Int. Cl.⁴: **G01N 21/76**

(30) Priorität: **20.06.86 CH 2497/86**

(43) Veröffentlichungstag der Anmeldung:
**23.12.87 Patentblatt 87/52**

(84) Benannte Vertragsstaaten:
**AT BE CH DE ES FR GB GR IT LI LU NL SE**

(71) Anmelder: **Tecan AG**
**Landhaus Holgass**
**CH-8634 Hombrechtikon(CH)**

(72) Erfinder: **Döme, Peter**
**Aehrenweg 32**
**CH-8634 Hombrechtikon(CH)**
Erfinder: **Abplanalp, Heinz**
**Landhaus Holgass**
**CH-8634 Hombrechtikon(CH)**
Erfinder: **Von Ah, Thomas**
**Hohlstrasse 335**
**CH-8004 Zürich(CH)**

(74) Vertreter: **Lusuardi, Werther Giovanni, Dr.**
**Patentanwalt Stockerstrasse 8**
**CH-8002 Zürich(CH)**

(54) **Verfahren für die Chemilumineszenz-Gasanalyse und Photodioden-Chemilumineszenzdetektor.**

(57) Bie diesem Verfahren für die Chemilumineszenz Gasanalyse und Photodioden-Chemilumineszenzdetektor wird ein Probengas (5) mit einem Reaktionsgas (4) vermischt und die der nachfolgenden chemischen Reaktion zwischen Proben-und Reaktionsgas (4,5) auftretende Chemilumineszenz als Mass für die Konzentration des im Probengas (5) enthaltenen, zu bestimmenden Stoffes verwendet.

Zwecks Erhöhung des Wirkungsgrades wird durch geeignete Wahl der Strömungsverhältnisse der beiden Gase (4,5), des Druckes in der Reaktionskammer (1) und der Konzentration des Reaktionsgases (4) am Orte der Durchmischung (14) die Chemilumineszenz auf eine nahezu punktförmig konzentrierte Zone limitiert.

Fig. 1

## Verfahren für die Chemilumineszenz-Gasanalyse und Photodioden-Chemilumineszenzdetektor

Die Erfindung bezieht sich auf ein Verfahren für die Chemilumineszene-Gasanalyse bei dem ein Probengas mit einem Reaktionsgas vermischt und die bei der nachfolgenden chemischen Reaktion zwischen Proben-und Reaktionsgas auftretende Chemilumineszenz als Mass für die Konzentration des im Probengas enthaltenen, zu bestimmenden Stoffes verwendet wird, sowie einem Photodioden-Chemilumineszenzdektor zur Durchführung des Verfahrens.

In der Praxis kann dieses Verfahren für die Gasanalyse, u.a. zur Konzentrationsbestimmung von Stickoxyden, Ethylen oder Ozon in der Luft eingesetzt werden. Bei vielen Verbrennungsprozessen gelangen mit den Abgasen gesundheitsgefährdende Stickoxide in die Atmosphäre. Es bedarf deshalb empfindlicher Messverfahren zur analytischen Bestimmung der NO-Anteile in der Umgebungsluft oder in Industrieabgasen. In neuerer Zeit ist insbesondere auch die Schadstoffbestimmung von Katalysatorautos in den Brennpunkt des Interesses geraten.

Bei einem dieser Verfahren, wie es beispielsweise in der DE-OS 22 31 466 beschrieben ist, wird die von der NO-Konzentration im Probengas abhängige Lichtstärke der bei der chemischen Reaktion zwischen Stickoxid und Ozon auftretenden Chemilumineszenz als Messeffekt genutzt. Der Wirkungsgrad der optoelektrischen Umsetzung des bei diesem bekannten Verfahren abgestrahlten Lichtes ist, bedingt durch ungünstige geometrische Anordnung, relativ klein, so dass das - schwache Nutzsignal der Fotodiode einer Verstärkung bedarf und schon geringe Verschmutzungen der lichdurchlässigen Reaktionskammer das Messignal derart vermindern, dass das Eigenrauschen der elektronischen Bauelemente eine Messung verunmöglicht.

Bei einem anderen dieser bekannten Verfahren, wie es beispielsweise in der DE-OS 30 29 092 beschrieben ist, wird durch eine über Umfang der Reaktionskammer gleichmässig verteilte Einleitung der Gase, statt einer möglichst punktförmig konzentrierten, eine eher flächenmässig ausgedehnte Reaktionszone erzeilt. Damit steigt aber der apparative Aufwand zur Messung der Chemilumineszenz unverhältnismässig, da nicht nut die Zufuhr der Gase komplizierter gestaltet ist, sondern auch mehrere Photodioden zur Messung erforderlich sind.

Hier will die Erfindung Abhilfe schaffen. Der Erfindung liegt die Aufgabe zugrunde, den Wirkungsgrade bei der Chemilumineszenz-Gasanalyse mit einer möglichst punktförmig konzentrierten Reaktionszone zu erhöhen und die Verschmutzung weitgehend zu eliminieren.

Die Erfindung löst die gestellte Aufgabe mit einem Verfahren für die Chemilumineszenz-Gasanalyse, welches die Merkmale des Anspruchs 1 aufweist, sowie einem Photodioden-Chemilumineszenzdetektor, welcher die Merkmale des Anspruchs 6 aufweist.

Die durch die Erfindung erreichten Vorteile sind im wesentlichen darin zu sehen, dass dank der erfindungsgemässen geometrischen Anordnung für die Abstrahlung des bei der chemischen Reaktion entstehenden Lichtes ein grosser Raumwinkel freigegeben und damit eine optische Auskoppelung möglich ist, durch welche das generierte Licht zum grössten Teil erfasst werden kann. Die nahezu kugelförmige, annähernd punktuelle Lumineszenzzone kann äusserst präzise in den einen Brennpunkt des rotationsellipsoiden Spiegels gebracht werden, in dessen anderem Brennpunkt sich die Empfangsdiode befindet. Dadurch kann eine 2,5-fache Verstärkung des Lichtes gegenüber bekannten Photodioden-Chemilumineszenzdetektoren erreicht werden. Zudem führt sie einer verschmutzungsunempfindlicheren Detektion, da die Gefässwandung der Reaktionskammer zum überwiegenden Teil nur einmal von der Strahlung durchquert werden muss.

Ein Ausführungsbeispiel der Erfindung, welches zugleich das Funktionsprinzip erläutert, ist in der Zeichnung dargestellt und wird im folgenden näher beschrieben.

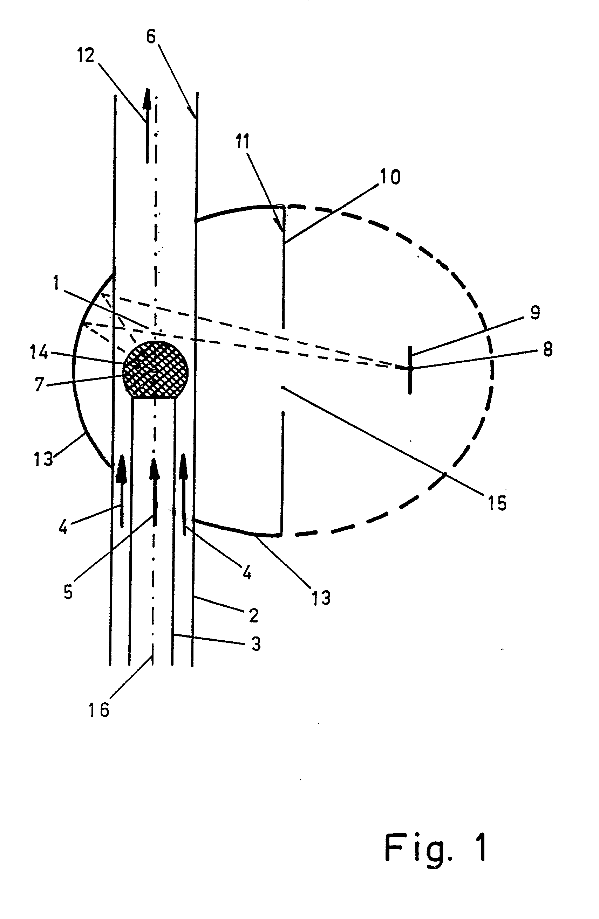

Figur 1 stellt einen Längsschnitt durch den erfindungsgemässen Photodioden-Chemilumineszenzdetektor dar und zeigt ein einem lichtdurchlässigen Material, beispielsweise Glas, bestehendes Aussenrohr 2, welches das Reaktionsgas 4, beispielsweise Ozon führt. Im Inneren des Aussenrohres 2 ist konzentrisch ein Innenrohr 3 angeordnet, welches das Probengas 5 mit der zu bestimmenden Konzentration, z.B. an Stickoxid koaxial zum Ozonstrom 4 einführt. Durch geeignete Wahl der Einflussparameter (Rohdurchmesser, Strömungsgeschwindigkeiten, Kammerdruck und Ozonkonzentration) kann die Form und Grösse des Reaktionsvolumens 14 bestimmt und auf die Fläche der verwendeten Fotodiode 9 abgestimmt werden. Bei einem Innendurchmesser von 2,9 nm des Innenrohrs 3, einem Durchmesser von 7,7 mm des Aussenrohrs 2, einem Ozonfluss von 90 ml/min und einem Probegasfluss von 180 ml/min ergibt sich beispielsweise eine kugelförmige Reaktionszone 14 mit einem Durchmesser von etwa 8 mm.

Die Verhältnisse der Flussgeschwindigkeiten von Ozon 4 und Probengas 5, sowie der Gesamtfluss bestimmen die Durchmischung der Reaktionspartner. Zur Erzielung eines kleinen Reaktionsvolumens 14, von etwa 0.01 - 1,000 ccm, wie es die Erfindung anstrebt, ist eine schnelle Durchmischung wichtig. Bei der Reaktion von Stickoxyd mit Ozon hat es sich als vorteilhaft erwiesen, wenn die Strömungsgeschwindigkeit des Probengases 5 um das 1,5-bis 2-fache grösser ist als diejenige des Reaktionsgases 4 und die Ozonkonzentration vorzugsweise das 4-bis 6-fache der Stickoxydkonzentration beträgt.

Der Druck in der Reaktionskammer 1 wird vorzugsweise im Bereich des Normaldruckes (1 atm) gehalten.

Das konzentrische Einführen der Gase 4,5 lässt die Reaktion im Zentrum des Aussenrohrs 2 stattfinden. Dabei verringert ein Ozon-(Luft)-Film entlang der Innenwand 6 des Aussenrohrs 2 dessen Verschmutzung, vor allem im Bereich der Reaktion und Detektion. Da die Gase 4,5 nirgends aufprallen, sondern lediglich an den Wandungsflächen vorbeiströmen, wird eine mögliche Verschmutzung weiter verringert, so dass der Photodioden-Chemilumineszenzdetektor nur eine geringe Wartung benötigt.

Eine in der Zeichnung nicht dargestellte Aufhängung des Aussenrohrs 2 mittels einer Steckverbindung erlaubt ein problemloses Auswechseln.

Das Aussenrohr 2 durchstösst ein auf der Innenseite verspiegeltes Rotationsellipsoid 13, wobei die Zylinderachse 16 des Aussenrohrs 2 durch den einem Brennpunkt 7 des Ellipsoidspiegels 13 verläuft und das Zentrum der Reaktionszone 14 mit diesem Brennpunkt 7 in Uebereinstimmung gebracht wird. Im anderen Brennpunkt 8 des Ellipsoidspiegels 13 ist eine Fotodiode 9 angeordnet. Diese Anordung erlaubt eine maximale Lichtausbeute mit minimaler Diodenfläche.

Eine weitere Variante des erfindungsgemässen Photodioden-Chemilumineszenzdetektors its gestrichelt angedeutet und besteht darin,, dass ein Halbellipsoidspiegel 13 mit einer eine zirkuläre Oeffnung 15 aufweisenden, auf der Innenseite 11 verspiegelten Blende 10 verwendet wird.

Mit einem optischen Chopper und einem Synchrongleichrichter, welche beide in der Figur nicht dargestellt sind, kann die Temperaturdrift ausgefiltert werden.

Um der, durch Verschmutzung der Innenwand 6 des Aussenrohres 6, mit der Zeit auftretenden Verminderung des Nutzsignals entgegenzutreten, kann das Aussenrohr 2 gegenüber dem Ellipsoidspiegel 13 verschiebbar angeordnet werden, so dass durch eine Translationsverschiebung des Aussenrohres 2 gegenüber dem fest bleibenden Innenrohr 3 die verschmutzten Flächen des Aussenrohres 2 aus dem Detektionsbereich entfernt werden können.

## Ansprüche

1. Verfahren für die Chemilumineszenz-Gasanalyse bei dem ein Probengas (5) mit einem Reaktionsgas (4) vermischt und die bei der nachfolgenden chemischen Reaktion zwischen Proben-und Reaktiongas (4,5) auftretende Chemilumineszenz als Mass für die Konzentration des im Probengas (5) enthaltenen, zu bestimmenden Stoffes verwendet wird, dadurch gekennzeichnet, dass die Strömungsverhältnisse der beiden Gase (4,5), der Druck in der Reaktionskammer (1) und die Konzentration des Reaktionsgases (4) so gewählt werden, dass am Orte der Durchmischung (14) die Chemilumineszenz sich nahezu punktförmig konzentriert ausbildet.

2. Verfahren nach Anspruch 1, dadurch gekennzeichnet, dass das Probengas (5) im wesentlichen koaxial und in gleichsinniger Strömungsrichtung mit dem Reaktiongas (4) zusammengeführt wird, wobei das Probengas (5) konzentrisch vom Reaktiongas (4) umströmt wird.

3. Verfahren nach Anspruch 1 oder 2, dadurch gekennzeichnet, dass bei der Bestimmung der Stickoxydkonzentration die Strömungsgeschwindigkeit des Probengas (5) um das 1,5-bis 2-fache grösser ist als diejenige des Reaktionsgases (4) und die Ozonkonzentration vorzugsweise 4-bis 6-fache der Stickoxydkonzentration beträgt.

4. Verfahren nach einem der Anspruch 1 bis 3, dadurch gekennzeichnet, dass der Ort der Durchmischung (14), in dem sich die nahezu punktförmig konzentrierte Chemilumineszenz ausbildet, in den einen Brennpunkt (7) eines innenverspiegelten Rotationsellipsoides (13) gebracht wird, in dessen anderem Brennpunkt (8) ein Halbleiter-Strahlungsempfänger (9) liegt.

5. Verfahren nach einem der Ansprüche 1 bis 4, dadurch gekennzeichnet, dass das Probengas (5) Stickoxid enthält und das Reaktionsgas (4) Ozon ist.

6. Photodioden-Chemilumineszenzdetektor zur Durchführung des Verfahrens gemäss einem Ansprüche 1 bis 5 mit einer Reaktionskammer (1) mit rohrförmigen Zuleitungen für das Probengas (5) und das Reaktionsgas (4), einer Ableitung für das Gasgemisch (12), ein die Reaktionkammer (1) mit ihren Zu-und Ableitungen umgebendes, mindestens teilweise photonendurchlässiges Aussenrohr (2) und einem Halbleiter-Strahlungsempfänger (9), dadurch gekennzeichnet, dass die Reaktionskammer (1) im einem Brennpunkt (7) und der Halbleiter-Strahlungsempfänger (9) in anderen Brennpunkt (8) eines Ellipsoidspiegels (13) angeordnet sind.

7. Photodioden-Chemilumineszenzdetektor nach Anspruch 6, dadurch gekennzeichnet, dass das Aussenrohr (2) gegenüber dem Ellipsoidspiegel (13) verschiebbar angeordnet ist.

8. Photodioden-Chemilumineszenzdetektor nach Anspruch 6 oder 7, dadurch gekennzeichnet, dass der Ellipsoidspiegel (13) aus einem abgeschnittenen Rotationsellipsoid besteht.

9. Photodioden-Chemilumineszenzdetektor nach Anspruch 8, dadurch gekennzeichnet, dass die zwischen den beiden Brennnpunkten (7,8) liegende Schnittfläche des Rotationsellipsoides als Blende (10) ausgebildet ist, welche an der, der Reaktionskammer (1) zugewandten Seite eine verspiegelte Oberfläche (11) aufweist.

10. Photodioden-Chemilumineszenzdetektor nach einem der Ansprüche 6 bis 9, dadurch gekennzeichnet, dass das Reaktionsvolumen (14) der Reaktionkammer (1) zwischen 0.01 - 1,00 ccm, vorzugsweise zwischen 0,1 - 0,3 ccm, beträgt.

Fig. 1